# EUROPEAN PATENT SPECIFICATION

(11) **EP 4 187 852 B1**
(45) Date of publication and mention of the grant of the patent: **15.10.2025**
(21) Application number: 22205411.6
(22) Date of filing: 03.11.2022
(51) Int. Cl.: H04L 9/40, G06F 21/60

(54) **INFORMATION PROCESSING SYSTEM FOR CONTROLLING APPLICATION ACCESS BASED ON PROCESS-LEVEL COORDINATION**
INFORMATIONSVERARBEITUNGSSYSTEM ZUR STEUERUNG DES ANWENDUNGSZUGRIFFS AUF PROZESSEBENE
SYSTÈME DE TRAITEMENT D'INFORMATIONS POUR LE CONTRÔLE D'ACCÈS AUX APPLICATIONS AU NIVEAU DES PROCESSUS

(30) Priority: 26.11.2021 JP 2021192235
(43) Date of publication of application: 31.05.2023
(73) Proprietor: Ricoh Company, Ltd., Tokyo 143-8555 (JP)
(72) Inventor: Kodama, Kai, Tokyo, 143-8555 (JP)
(74) Representative: Marks & Clerk LLP

(56) References cited:
- JP-A- 2021 018 805
- US-A1- 2008 059 962
- US-A1- 2012 017 286

## Description

### BACKGROUND

### Technical Field

The present disclosure relates to an information processing system, an information processing method, and carrier means.

### Related Art

Services are known for providing applications having combinations of processes (such as printing, scanning, saving data in folders, and transmitting emails). In such a service, a process called a workflow is performed. An application is available to users belonging to a tenant that makes a contract for the use of the application.

A technique has been proposed for supporting the development of an application (see, for example, Japanese Unexamined Patent Application Publication No. 2018-014079). Japanese Unexamined Patent Application Publication No. 2018-014079 discloses an information processing system for providing a tool for creation of an application and receiving a designation of each of processes included in the application.

In the technique of the related art, an administrator sets in advance a user who is to use an application. For example, a special application may be available only to specific users. The operation of setting, for each application, users to which the application is available places a heavy burden on the administrator when a tenant makes a contract for the use of a large number of applications or includes a large number of users.

JP 2021 018805 discloses a cloud-based system which provides services to users registered with a tenant, and has an issuing unit that issues a communication destination for registering used in association with the tenant. US 2008/0059962 discloses an image-forming apparatus configured to be controlled based on access-control information and to perform a flow which includes performing a plurality of functions. US 2012/017286 discloses an image forming apprature which includes a login unit configured to receive a login or a user.

### SUMMARY

An information processing system and an information processing method are provided as defined by the independent claims.

With the above-described information processing system, an administrator does not have to set in advance a user who is to use an application.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIGs. 1A and 1B are diagrams illustrating a relationship between components and applications according to an embodiment of the present disclosure;
FIG. 2 is a diagram illustrating an overview of a process for automatically determining a user authorized to use an application according to an embodiment of the present disclosure;
FIG. 3 is a diagram illustrating an example system configuration of a service providing system according to an embodiment of the present disclosure;
FIG. 4 is a diagram illustrating an example hardware configuration of an information processing system and a terminal apparatus according to an embodiment of the present disclosure;
FIG. 5 is a diagram illustrating an example hardware configuration of an image forming apparatus, which is an example of an apparatus, according to an embodiment of the present disclosure;
FIG. 6 is a diagram illustrating an example functional configuration of the service providing system according to an embodiment of the present disclosure;
FIG. 7 is a table illustrating an example of external service coordination information managed by an external service coordination information registration unit according to an embodiment of the present disclosure;
FIG. 8 is a view illustrating an example of an application, a workflow, a component, an external service system, account information, a user, and a user group according to an embodiment of the present disclosure;
FIG. 9 is a view illustrating an example of a user editing screen displayed on the terminal apparatus according to an embodiment of the present disclosure;
FIGs. 10A and 10B are views illustrating an example of a screen for selecting an account, associating a component with external service coordination information, selecting a user/user group, and setting an account name according to an embodiment of the present disclosure;
FIG. 11 is a diagram further illustrating settings on an application setting screen and an external service coordination screen according to an embodiment of the present disclosure;
FIG. 12 is a diagram illustrating an example of an application list screen displayed on the apparatus according to an embodiment of the present disclosure;
FIG. 13 is a sequence diagram illustrating an example of a process in which an administrator selects an account, selects a user/user group, and sets an account name according to an embodiment of the present disclosure;
FIG. 14 is a sequence diagram illustrating an example of a process for displaying an application list screen on the apparatus according to an embodiment of the present disclosure;
FIG. 15 is a flowchart illustrating an example of a process in which a determination unit limits a user authorized to use each of applications included in an application list to a user belonging to users/user groups to which external service coordination information associated with the application are shared according to an embodiment of the present disclosure;
FIG. 16 is a sequence diagram illustrating an example of a process in which an administrator selects an account, selects a user/user group, and sets an account name according to an example;
FIG. 17 is a view illustrating an example of an authorized-user list screen displayed on the terminal apparatus according to an example;
FIG. 18 is a sequence diagram illustrating an example of a process in which an administrator changes a user group according to an example; and
FIG. 19 is a view illustrating an example of an authorized-user list difference screen displayed on the terminal apparatus according to an example.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An information processing system and an information processing method performed by the information processing system according to an embodiment of the present disclosure will be described hereinafter with reference to the drawings.

### Overview of Processes

Some applications are available only to users. Examples of such applications include an application cooperating with an external service system that is shared among members of the personnel department of a company. Users of this application are to be limited to the members of the personnel department. It is desirable to prevent a user other than the members of the personnel department from using the application. In the related art, the administrator performs setting for each application to set users who are authorized to use the application.

This embodiment provides the following features.

External service coordination information is shared to a user or a user group (hereinafter referred to as "user/user group") belonging to a tenant. The external service coordination information is information including a setting of an account used for each external service system with which an application cooperates.

A user authorized to use an application is limited to a user belonging to users/user groups to which external service coordination information associated with the application are shared. For example, such user is one of all users, or a user belonging to all user groups, to which external service coordinate information associated with the application are shared.

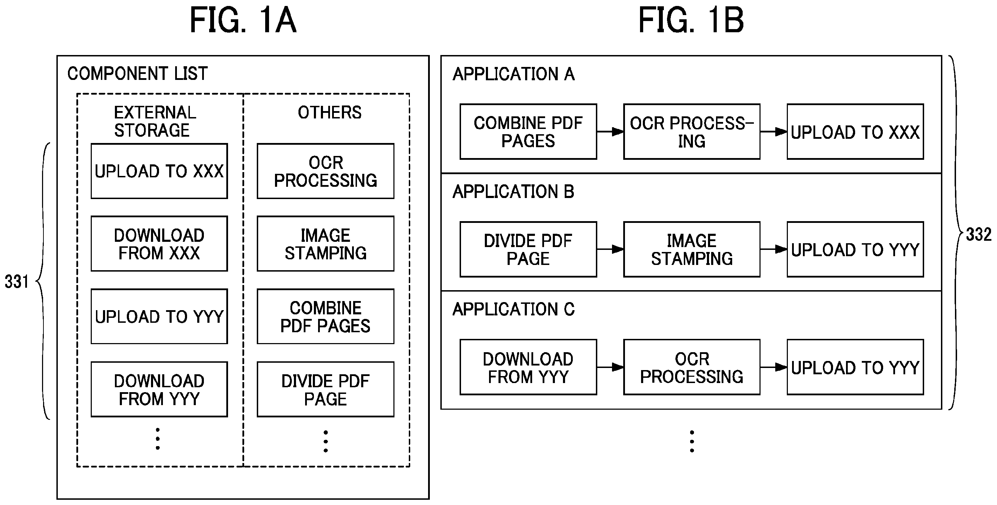

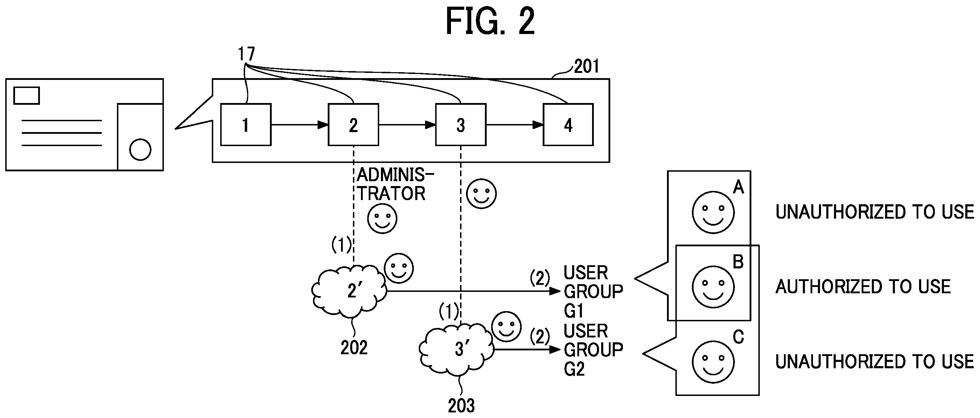

An overview will be briefly described with reference to FIGs. 1A, 1B, and 2. A workflow will further be described with reference to FIGs. 1A and 1B. FIGs. 1A and 1B are diagrams illustrating a relationship between components 331 and applications 332. In this embodiment, the plurality of components 331 are combined to form the applications 332. The components 331 are parts of a program prepared for each function or process. As illustrated in FIG. 1A, the components 331 include components for uploading and downloading files to and from various external service systems, and components for performing processes related to optical character recognition (OCR), stamping, and Portable Document Format (PDF) on the files.

As illustrated in FIG. 1B, each of the applications 332 includes one or more of the components 331 that are arranged in the order of execution. The applications 332 are executed to execute workflows.

FIG. 2 is a diagram illustrating an overview of a process for automatically determining a user authorized to use an application. In FIG. 2, a workflow executed by an application 201 includes four components 17. Of the four components 17, the second and third components 17 (components 2 and 3 in FIG. 2) use the external service system 40 (FIG. 1).
(1) To allow a user to use the external service system 40, the components 17 (the components 2' and 3' in FIG. 2) are associated with external service coordination information. The administrator sets an association between the components 17 and the external service coordination information.
(2) The administrator also sets a user/user group to which the external service coordination information is shared. In FIG. 2, external service coordination information 202 is shared to a user/user group G1, and external service coordination information 203 is shared to a user/user group G2. A user A and a user B belong to the user/user group G1, and the user B and a user C belong to the user/user group G2.

Accordingly, the application 201 is available to the user B, who belongs to users/user groups to which the external service coordination information 202 and the external service coordination information 203 are shared.

As described above, a user authorized to use an application is automatically determined by linking "application", "workflow", "component", "external service coordination information", "sharing user/user group", and "specific user" in this order.

The term "application" is a program to be executed by an apparatus or an information processing apparatus to allow a user to receive a service. Examples of the application include a web application to be executed by cooperation of a web browser and a program on a server, and a native application to be executed by an information processing apparatus with or without communication with a server. The web application may be a workflow application having a series of processes to be executed sequentially.

The application includes one or more processes. In an example, each process is any information processing operation in which certain functions are integrated such that the application can output an intended product. In this embodiment, a component or an information processing operation to be executed by the component corresponds to a process.

The term "process flow" refers to a plurality of processing operations to be executed in a determined order. A process flow may be referred to as a workflow.

The term "coordination information" refers to information for allowing an application to cooperate with an external service system. In an example, the coordination information includes account information. In this embodiment, the coordination information is represented by the term "external service coordination information".

The term "tenant" refers to an entity such as a company or an organization that has a contract with a service provider to receive a service. In this embodiment, the service provider is an information processing system. In one example, a user belongs to the tenant. In another example, a user may personally subscribe to the service.

The term "administrator" refers to a tenant administrator. The administrator is a person who performs various settings so that a user can use applications. A user and an administrator are not clearly distinguished from each other. In this embodiment, a user and an administrator are selectively used for convenience.

### First Embodiment

### System Configuration

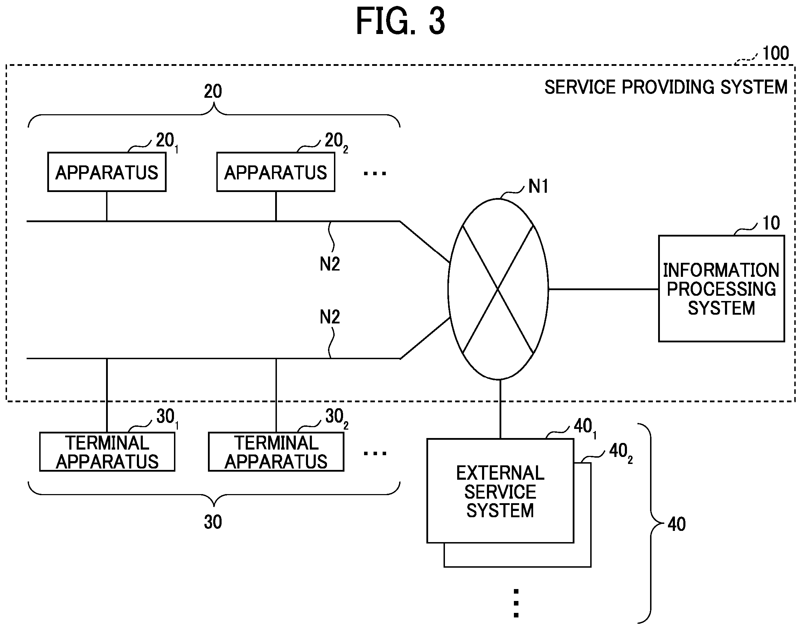

The system configuration of a service providing system 100 according to this embodiment will be described with reference to FIG. 3. FIG. 3 is a diagram illustrating an example system configuration of the service providing system 100 according to this embodiment.

The service providing system 100 illustrated in FIG. 3 includes an information processing system 10, an apparatus 20, and a terminal apparatus 30. The information processing system 10, the apparatus 20, and the terminal apparatus 30 are communicably connected to each other via a wide-area network N1 such as the Internet. The service providing system 100 communicates with an external service system 40. The external service system 40 is an external system.

The information processing system 10 is implemented by one or more information processing apparatuses. The information processing system 10 provides various services, each implemented by a series of processes, in cooperation with the external service system 40, such as a cloud service, via the network N1. The information processing system 10 may be implemented by cloud computing or by a single information processing apparatus. The term "cloud computing" refers to a model for enabling the use of resources on a network without identifying specific hardware resources. The information processing system 10 may be located on the Internet or in an on premise environment. A series of processes is provided by one application. A series of processes is also referred to as a "process flow" or a "workflow".

The apparatus 20 is any electronic apparatus used by a user. Examples of the apparatus 20 include an image forming apparatus such as a multifunction peripheral (MFP), a personal computer (PC), a projector, an electronic whiteboard, a video conference terminal, and a digital camera. The apparatus 20 is connected to a network N2. The user can use the apparatus 20 to use various services provided by the information processing system 10 or the external service system 40.

In the following description, a plurality of apparatuses 20 are indicated using subscripts, such as "apparatus 20₁" and "apparatus 20₂", when distinguished from each other.

Examples of the terminal apparatus 30 include a desktop PC, a laptop PC, a smartphone, and a tablet terminal, each of which is used by the administrator or a user. The terminal apparatus 30 is connected to the network N2. The administrator or a user can operate the terminal apparatus 30 to use various services provided by the information processing system 10 or the external service system 40 and also to set an application.

In the following description, a plurality of terminal apparatuses 30 are indicated using subscripts, such as "terminal apparatus 30₁" and "terminal apparatus 30₂", when distinguished from each other.

The external service system 40 includes one or more information processing apparatuses that provide a service via the network N1 in response to the execution of an application. The application is executed to store or read data. An external system, such as the external service system 40, refers to a system separate from the information processing system 10. The external service system 40 and the information processing system 10 are typically operated by different companies. For example, a user has different accounts for the external service system 40 and the information processing system 10.

Examples of the external service system 40 include various cloud service systems and an application service provider (ASP). The external service system 40 may provide various external services via networks. An example of the services is a storage service. The external service system 40 may be located on the Internet or in an on premise environment.

In the following description, a plurality of external service systems 40 are indicated using subscripts, such as "external service system 40₁" and "external service system 40₂", as illustrated in FIG. 3, when distinguished from each other.

### Example Hardware Configuration

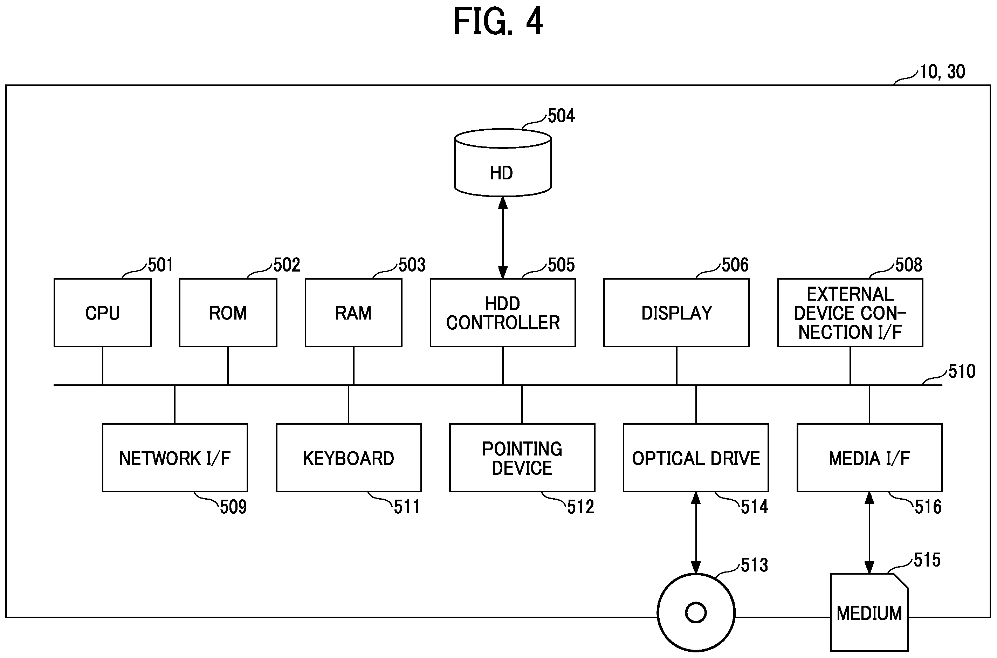

The hardware configuration of the information processing system 10 and the terminal apparatus 30 according to this embodiment will be described with reference to FIG. 4. Information Processing System and Terminal Apparatus

FIG. 4 illustrates an example hardware configuration of the information processing system 10 and the terminal apparatus 30 according to this embodiment. As illustrated in FIG. 4, the information processing system 10 and the terminal apparatus 30 are constructed by a computer and include a central processing unit (CPU) 501, a read-only memory (ROM) 502, a random access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, an optical drive 514, and a media I/F 516.

The CPU 501 controls the overall operation of the information processing system 10 and the terminal apparatus 30. The ROM 502 stores programs such as an initial program loader (IPL) to boot the CPU 501. The RAM 503 is used as a work area for the CPU 501. The HD 504 stores various data such as a program. The HDD controller 505 controls reading or writing of various data from or to the HD 504 under control of the CPU 501. The display 506 displays various types of information such as a cursor, a menu, a window, text, or an image. The external device connection I/F 508 is an interface for connecting to various external devices. Examples of the external devices include, but are not limited to, a universal serial bus (USB) memory and a printer. The network I/F 509 is an interface for performing data communication using the network N2. The bus line 510 is an address bus, a data bus, or the like for electrically coupling the components illustrated in FIG. 4, such as the CPU 501, to each other.

The keyboard 511 is an example of an input device having a plurality of keys to be used to input characters, numerals, or various instructions. The pointing device 512 is an example of an input device to be used to select or execute various instructions, select an item for processing, or move a cursor being displayed. The optical drive 514 controls reading or writing of various data from or to an optical recording medium 513, which is an example of a removable recording medium. Examples of the optical drive 514 include a compact disc (CD), a digital versatile disc (DVD), and Blu-ray disc^{®}. The media I/F 516 controls reading or writing (storing) of data from or to a recording medium 515 such as a flash memory. Apparatus

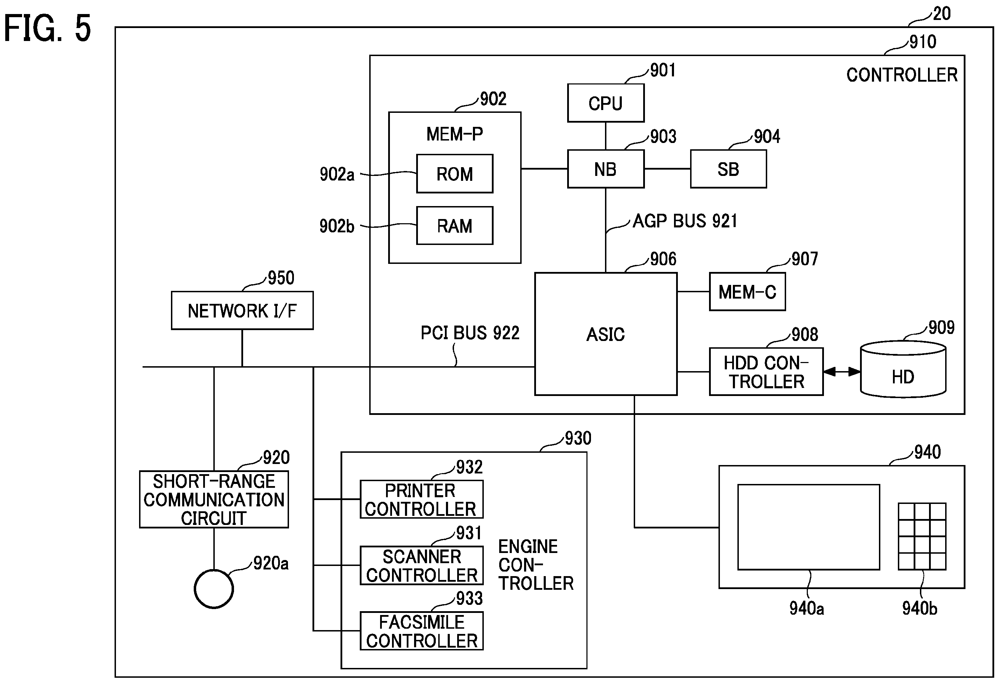

FIG. 5 is a hardware configuration diagram of an image forming apparatus, which is an example of the apparatus 20. As illustrated in FIG. 5, the image forming apparatus includes a controller 910, a short-range communication circuit 920, an engine controller 930, an operation panel 940, and a network I/F 950.

The controller 910 includes a CPU 901 as a main processor, a system memory (MEM-P) 902, a north bridge (NB) 903, a south bridge (SB) 904, an application specific integrated circuit (ASIC) 906, a local memory (MEM-C) 907 as a memory, an HDD controller 908, and an HD 909 as a memory. The NB 903 and the ASIC 906 are coupled through an accelerated graphics port (AGP) bus 921.

The CPU 901 is a controller that controls the overall operation of the image forming apparatus. The NB 903 couples the CPU 901 to the MEM-P 902, the SB 904, and the AGP bus 921. The NB 903 includes a memory controller for controlling reading or writing of various data from or to the MEM-P 902, a Peripheral Component Interconnect (PCI) master, and an AGP target.

The MEM-P 902 includes a ROM 902a as a memory that stores a program and data for implementing various functions of the controller 910. The MEM-P 902 further includes a RAM 902b as a memory that deploys the program and data, or as a drawing memory that stores drawing data for printing. The program stored in the RAM 902b may be stored in any computer-readable recording medium, such as a compact disc-read only memory (CD-ROM), a compact disc-recordable (CD-R), or a DVD, in an installable or executable file format for distribution.

The SB 904 couples the NB 903 to a PCI device or a peripheral device. The ASIC 906 is an integrated circuit (IC) dedicated to an image processing use and including hardware elements for image processing, and couples the AGP bus 921, a PCI bus 922, the HDD controller 908, and the MEM-C 907 to each other. The ASIC 906 includes a PCI target, an AGP master, an arbiter (ARB) as a central processor of the ASIC 906, a memory controller, a plurality of direct memory access controllers (DMACs), and a PCI unit. The memory controller controls the MEM-C 907. The DMACs rotate image data with a hardware logic, for example. The PCI unit transfers data to a scanner controller 931, a printer controller 932, and a facsimile controller 933 through the PCI bus 922. The ASIC 906 may have a USB interface or an Institute of Electrical and Electronics Engineers 1394 (IEEE 1394) interface.

The MEM-C 907 is a local memory, which is used as a buffer for image data to be copied or a buffer for code. The HD 909 stores various image data, font data for printing, and form data. The HDD controller 908 controls reading or writing of various data from or to the HD 909 under control of the CPU 901. The AGP bus 921 is a bus interface for a graphics accelerator card, which has been proposed to accelerate graphics processing. The AGP bus 921 provides high-throughput direct access to the MEM-P 902 to make the graphics accelerator card fast.

The short-range communication circuit 920 is provided with a short-range communication circuit antenna 920a. The short-range communication circuit 920 is a communication circuit in compliance with a standard such as near field communication (NFC) or Bluetooth^{®}.

The engine controller 930 includes the scanner controller 931, the printer controller 932, and the facsimile controller 933. The operation panel 940 includes a panel display 940a and a hard keypad 940b. The panel display 940a is implemented by, for example, a touch panel that displays current set values or a selection screen to receive a user input. The hard keypad 940b includes a numeric keypad that receives set values of various image forming parameters such as an image density parameter and a start key that receives an instruction for starting copying. The controller 910 controls the overall operation of the image forming apparatus. For example, the controller 910 controls drawing, communication, or user inputs to the operation panel 940. The scanner controller 931 and the printer controller 932 each perform various image processing, such as error diffusion or gamma conversion.

The operation panel 940 may include an application switch key, which can be used to sequentially select a document box function, a copy function, a printer function, and a facsimile function of the image forming apparatus. The apparatus 20 (image forming apparatus) enters a document box mode in response to selection of the document box function, enters a copy mode in response to selection of the copy function, enters a printer mode in response to selection of the printer function, and enters a facsimile mode in response to selection of the facsimile function.

The network I/F 950 is an interface for performing data communication using the network N2. The short-range communication circuit 920 and the network I/F 950 are electrically coupled to the ASIC 906 through the PCI bus 922.

### Functions

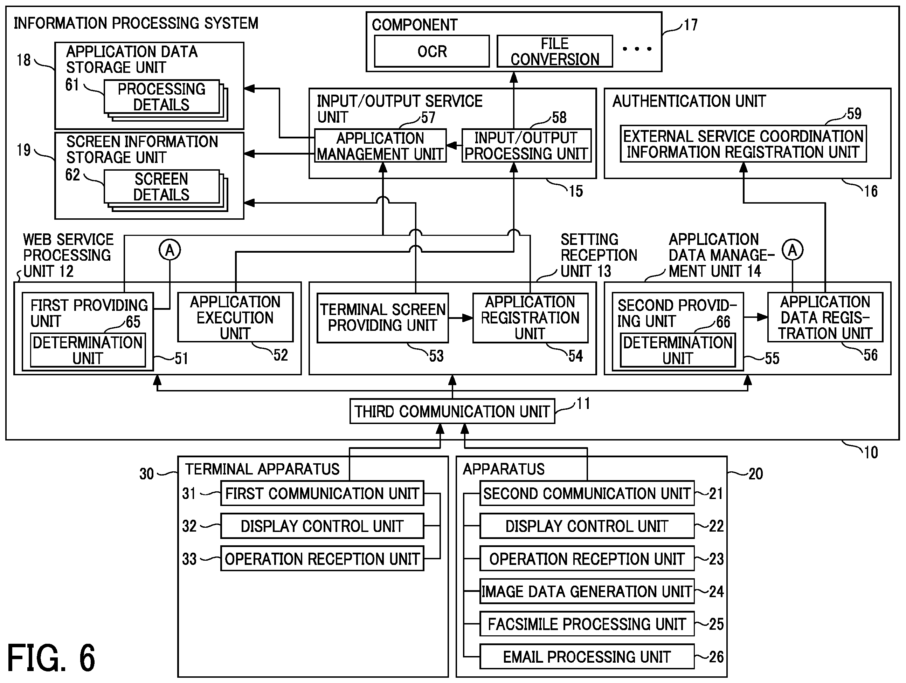

The functional configuration of the service providing system 100 (FIG. 3) according to this embodiment will be described with reference to FIG. 6. FIG. 6 is a diagram illustrating an example functional configuration of the service providing system 100 according to this embodiment.

### Apparatus

The apparatus 20 includes a second communication unit 21, a display control unit 22, an operation reception unit 23, an image data generation unit 24, a facsimile processing unit 25, and an email processing unit 26. The second communication unit 21, the display control unit 22, the operation reception unit 23, the image data generation unit 24, the facsimile processing unit 25, and the email processing unit 26 are functions or means implemented by the CPU 901 executing instructions included in one or more programs installed in the apparatus 20. For example, the second communication unit 21, the display control unit 22, and the operation reception unit 23 are implemented by a web browser, and the other components are implemented by individual applications (native applications).

The second communication unit 21 transmits and receives various types of information to and from the information processing system 10. In this embodiment, the second communication unit 21 receives screen information and the like of various applications from the information processing system 10, and transmits scan data, facsimile (fax) reception data, and the like to the information processing system 10.

The display control unit 22 interprets screen information of various screens to display screens on the panel display 940a. The operation reception unit 23 receives various operations of the user on the various screens displayed on the panel display 940a.

The image data generation unit 24 generates image data (e.g., a PDF file) in response to scanning of a document by the scanner controller 931. The facsimile processing unit 25 performs processing related to reception and transmission of a facsimile message by the facsimile controller 933 to create image data (e.g., a PDF file) to be transmitted and received. In response to receipt of a facsimile message, the facsimile processing unit 25 requests the information processing system 10 to execute a facsimile application associated in advance.

The email processing unit 26 performs processing related to transmission and reception of an email message. In response to receipt of an email message, the email processing unit 26 requests the information processing system 10 to execute an application associated in advance.

### Terminal Apparatus

The terminal apparatus 30 includes a first communication unit 31, a display control unit 32, and an operation reception unit 33. The first communication unit 31, the display control unit 32, and the operation reception unit 33 are functions or means implemented by the CPU 501 executing instructions included in one or more programs installed in the terminal apparatus 30. The program may be a web browser or dedicated software.

The first communication unit 31 transmits and receives various types of information to and from the information processing system 10 or the external service system 40. In this embodiment, the first communication unit 31 receives various types of screen information and the like from the information processing system 10 or the external service system 40, and transmits information set by the user to the information processing system 10 or the external service system 40.

The display control unit 32 interprets screen information of various screens to display screens on the display 506. The operation reception unit 33 receives various operations of the user on various screens displayed on the display 506.

### Information Processing System

The information processing system 10 includes a third communication unit 11, a web service processing unit 12, a setting reception unit 13, an application data management unit 14, an input/output service unit 15, an authentication unit 16, a component 17, an application data storage unit 18, and a screen information storage unit 19. The third communication unit 11, the web service processing unit 12, the setting reception unit 13, the application data management unit 14, the input/output service unit 15, the authentication unit 16, the component 17, the application data storage unit 18, and the screen information storage unit 19 are functions or means implemented by the CPU 501 executing instructions included in one or more programs installed in the information processing system 10.

The third communication unit 11 transmits and receives various types of information to and from the terminal apparatus 30 and the apparatus 20. The setting reception unit 13 provides a setting site, such as an external service coordination screen or an application setting screen, to the terminal apparatus 30 by using screen details 62 and receives settings made on the setting site. The setting reception unit 13 includes a terminal screen providing unit 53 and an application registration unit 54. The terminal screen providing unit 53 provides a registration tool of an application. The terminal screen providing unit 53 registers the screen configuration of the application in the screen details 62. The application registration unit 54 transmits processing details 61 of the application to an application management unit 57.

The application data management unit 14 includes a second providing unit 55 and an application data registration unit 56. The second providing unit 55 provides an external service coordination screen, an application setting screen, and the like to prompt the administrator to set information to be used for executing an application of the information processing system 10. In response to a Hypertext Transfer Protocol (HTTP) request from the terminal apparatus 30, the second providing unit 55 generates screen information described in Hypertext Markup Language (HTML), Extensible Markup Language (XML), Cascade Style Sheet (CSS), JavaScript^{®}, or the like, and transmits the screen information to the terminal apparatus 30 as an HTTP response.

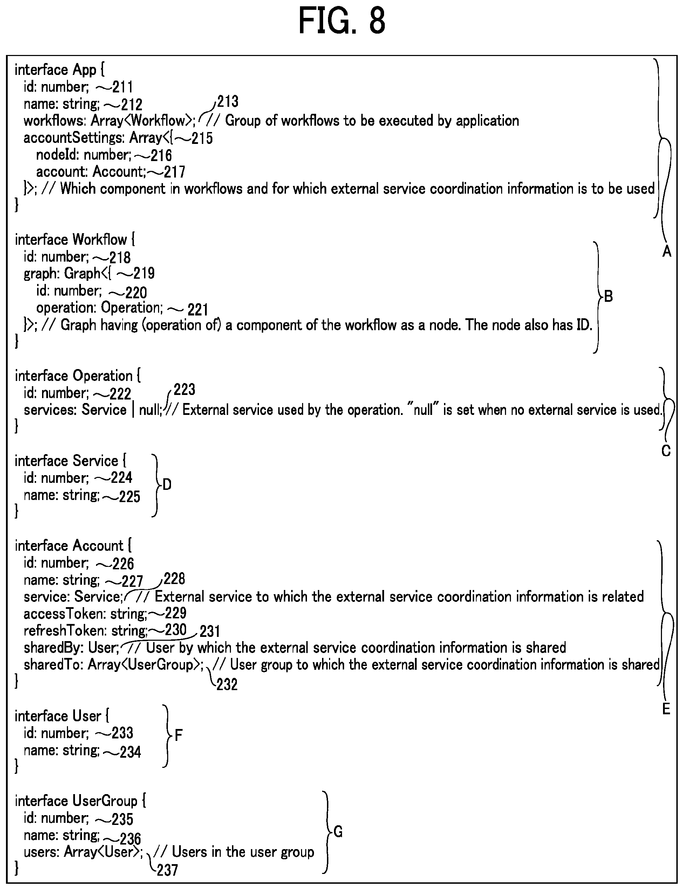

The application data registration unit 56 receives, from the second providing unit 55, information such as external service coordination information (account) and information for automatically determining a user who is to use an application (the settings (1) and (2) in FIG. 2 and information illustrated in FIG. 8 described below), and manages the received information. The application data registration unit 56 transmits the account of the user, the external service coordination information, and the like to the authentication unit 16.

The web service processing unit 12 provides screen information to the apparatus 20 or receives execution of various applications from the apparatus 20. The web service processing unit 12 includes an application execution unit 52 and a first providing unit 51. The application execution unit 52 receives execution of the scan application or the fax application from the apparatus 20 and requests an input/output processing unit 58 to execute an application such as the scan application or the facsimile application. The first providing unit 51 acquires a screen to be displayed by the application via the application management unit 57 and provides screen information to the apparatus 20.

The input/output service unit 15 includes the input/output processing unit 58 and the application management unit 57. The application management unit 57 manages the processing details 61 of the application (the order of execution of processes by the component 17) in the application data storage unit 18. The input/output processing unit 58 executes the application requested by the application execution unit 52. In response to execution of each application, the input/output processing unit 58 refers to the processing details 61 in the application data storage unit 18 and requests the component 17 to perform processes included in the application.

The processing details 61 include settings indicating which processes and in which order the scan application or the facsimile application is to perform the processes. In an example, the settings are made such that after OCR is performed, a request is made to the external service system 40 to perform processing. The screen details 62 include information such as a screen to be displayed on the terminal apparatus 30 at the setting site of the application and a transition of the screen.

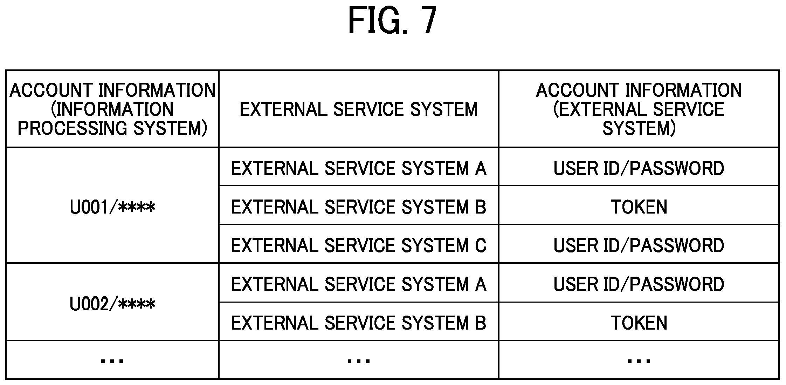

The authentication unit 16 performs a process for authenticating the user (or the administrator) and the apparatus 20. The authentication unit 16 includes an external service coordination information registration unit 59. An example of the external service coordination information is illustrated in FIG. 7. The authentication unit 16 stores account information such as a user name and a password. The account information includes account information for the information processing system 10 and account information for the external service system 40.

The external service coordination information registration unit 59 registers and manages external service coordination information set by the administrator. Examples of the external service coordination information include account information of the user for the external service system 40 in the case of an application that operates in cooperation with the external service system 40. The external service coordination information is associated with a user/user group to which the external service coordination information is shared. Associating external service coordination information with an application allows a user in the tenant to use the application without login to the external service system 40.

The component 17 is a generic term of individual functions that actually perform processes. In the component 17, one block corresponds to one process in a process flow. In an example, the component 17 includes OCR and file conversion. In the component 17, OCR is a process for recognizing text from image data. File conversion converts image data into a PDF file, for example. Examples of the component 17 include a component for making a request to the external service system 40 to perform processing, a component for translation, and various other kinds of components.

The first providing unit 51 and the second providing unit 55 include determination units 65 and 66, respectively. Each of the determination units 65 and 66 performs a process for determining a user belonging to users/user groups to which external service coordination information associated with the application are shared.

### External Service Coordination Information

FIG. 7 illustrates an example of the external service coordination information managed by the external service coordination information registration unit 59. The external service coordination information includes account information for the information processing system 10 and account information for each external service system 40 in association with each other. Thus, when a login user who has logged into the information processing system 10 is identified, the account information of the login user for the external service system 40 is also identified.

In one example, the account information for the external service system 40 includes a user ID (user name) and a password, or a token issued by the external service system 40. The account of a user for the external service system 40 may be shared to a user/user group. Example Management of Application, Workflow, Component, External Service System, External Service Coordination Information, User, and User Group

FIG. 8 illustrates information on an application, a workflow, the component 17, the external service system 40, account information, a user, and a user group, which is used in this embodiment.

Description A is information related to an application (an example of first information). The item "id" 211 is identification information of the application. The item "name" 212 is the name of the application. The item "workflows" 213 is a group of workflows to be executed by the application. The items "nodeld" 216 and "account" 217 in the item "accountSettings" 215 indicate a correspondence indicating which component in the workflows and for which external service coordination information is to be used.

Description B is information related to a workflow. The item "id" 218 is identification information of the workflow. The items "id" 220 and "operation" 221 in the item "graph" 219 indicate the configuration of the workflow having the component 17 as a node.

Description C is information related to the component 17. The item "id" 222 is identification information of the component 17. The item "services" 223 is an external service used by the component 17. The value "null" is set when no external service is used.

Description D is information related to an external service system 40. The item "id" 224 is identification information of the external service system 40. The item "name" 225 is the name of the external service system 40.

Description E is information related to an account (an example of second information). The item "id" 226 is identification information of the account. The item "name" 227 is the name of the account. The item "service" 228 indicates an external service system 40 to which the coordination information (account) is related. The item "accessToken" 229 is an access token for login to the external service system 40. The item "refreshToken" 230 is a refresh token for refreshing the access token. The item "sharedBy" 231 indicates a user by which the external service coordination information is shared. The item "sharedTo" 232 indicates a user group to which the external service coordination information is shared.

Description F is information related to a user. The item "id" 233 is identification information of the user. The item "name" 234 is the name of the user.

Description G is information related to a user group. The item "id" 235 is identification information of the user group. The item "name" 236 is the name of the user group. The item "users" 237 is a list of the users in the user group.

### Example Screen

### User Editing Screen

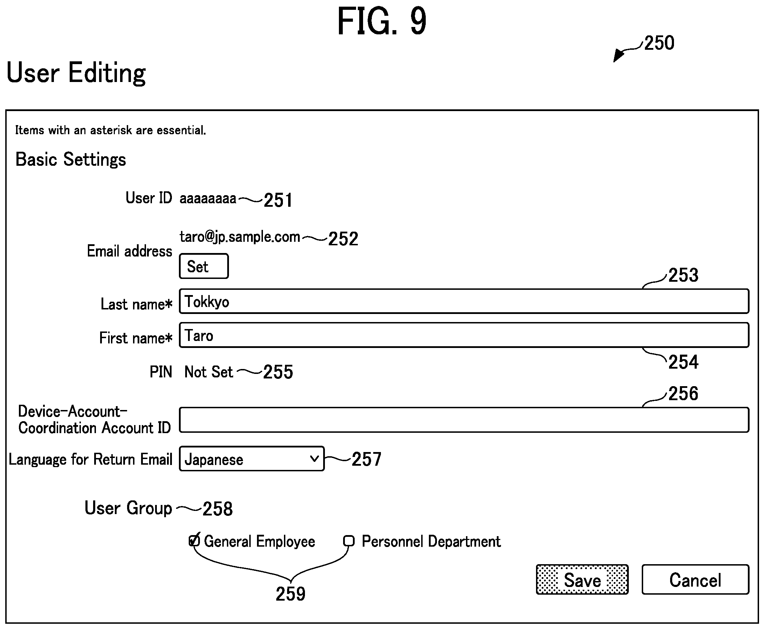

FIG. 9 is a view illustrating an example of a user editing screen 250 displayed on the terminal apparatus 30. The user editing screen 250 is a screen on which the administrator edits information on each user. The user editing screen 250 includes a user ID field 251, an email address field 252, a last name field 253, a first name field 254, a personal identification number (PIN) field 255, an account ID field 256 for device account coordination, an email language field 257, and a user group field 258.

The user group field 258 has radio buttons 259 to select a user group to which each user belongs. While FIG. 9 illustrates two user groups, namely, a general employee and a personnel department, a large number of groups may be presented in accordance with the department or attribute.

### Selection of Account, Association of Component with External Service Coordination Information, Selection of User/User Group, and Setting of Account Name

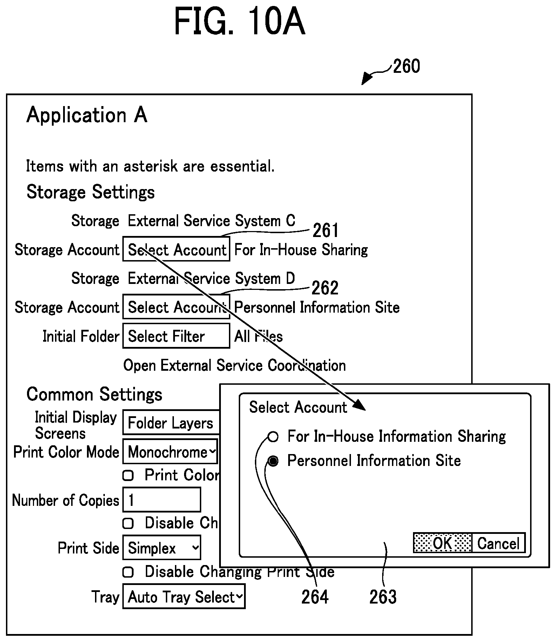

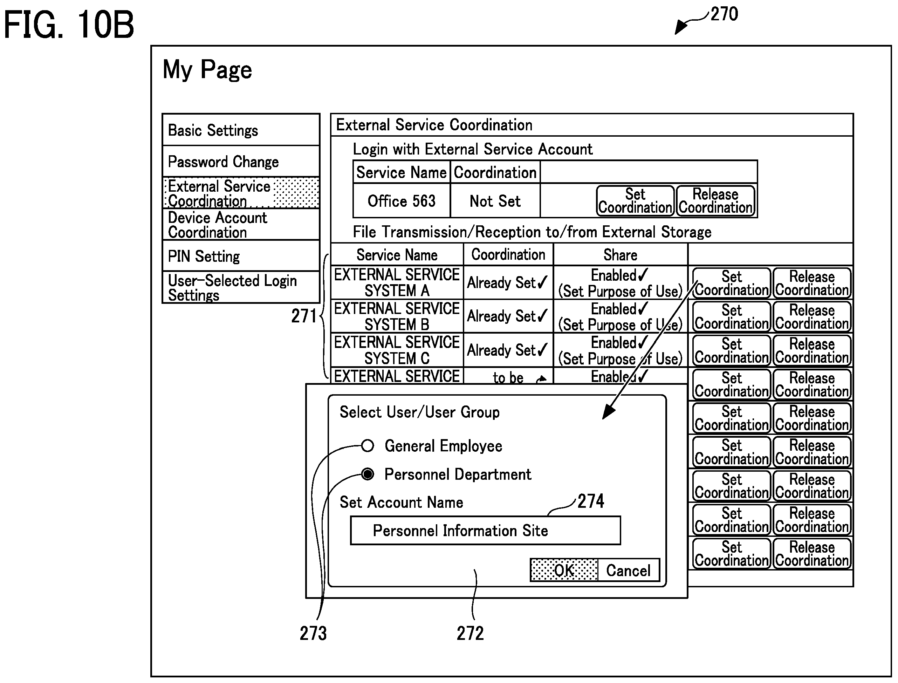

FIGs. 10A and 10B illustrate an example of a screen for selecting an account, associating a component with external service coordination information, selecting a user/user group, and setting an account name. In the setting of coordination with the external service system 40, the administrator sets to which user or user group to share the external service coordination information (account). The administrator assigns an account name for identification to the external service coordination information. Then, the administrator designates, on a setting screen of each application, an account name for each of the external service systems 40 with which components included in the application cooperate, and sets which external service coordination information is to be used.

FIG. 10A is an example of an application setting screen 260. FIG. 10B is an example of an external service coordination screen 270 related to a user.

The external service coordination screen 270 displays a list 271 of external service systems 40. The administrator selects any of the external service systems 40. In response to a predetermined operation, a pop-up screen 272 is displayed on the external service coordination screen 270. The pop-up screen 272 includes radio buttons 273 to select a user or user group, and an account name setting field 274. The administrator selects one of the radio buttons 273 to set to which user or user group to share the external service coordination information. The administrator sets the name of the external service coordination information in the account name setting field 274. As a result, the external service coordination information of the external service system 40 is associated with the user or user group (corresponding to the items "service" 228, "sharedBy" 231, and "sharedTo" 232 of the description E).

The application setting screen 260 displays selection fields 261 and 262 for selecting accounts for the external service systems 40 to be used by application A. In response to the administrator pressing any of the selection fields 261 and 262, a pop-up screen 263 is displayed on the application setting screen 260. The pop-up screen 263 includes radio buttons 264 to select an account name. A selected one of the radio buttons 264 presents the name of the external service coordination information set in the account name setting field 274. The administrator uses the selected one of the radio buttons 264 to set which external service coordination information to use for each of the external service systems 40 with which the component 17 cooperates (corresponding to the item "accountSettings" 215 of the description A).

### Additional Description of Application Setting Screen and External Service Coordination Screen

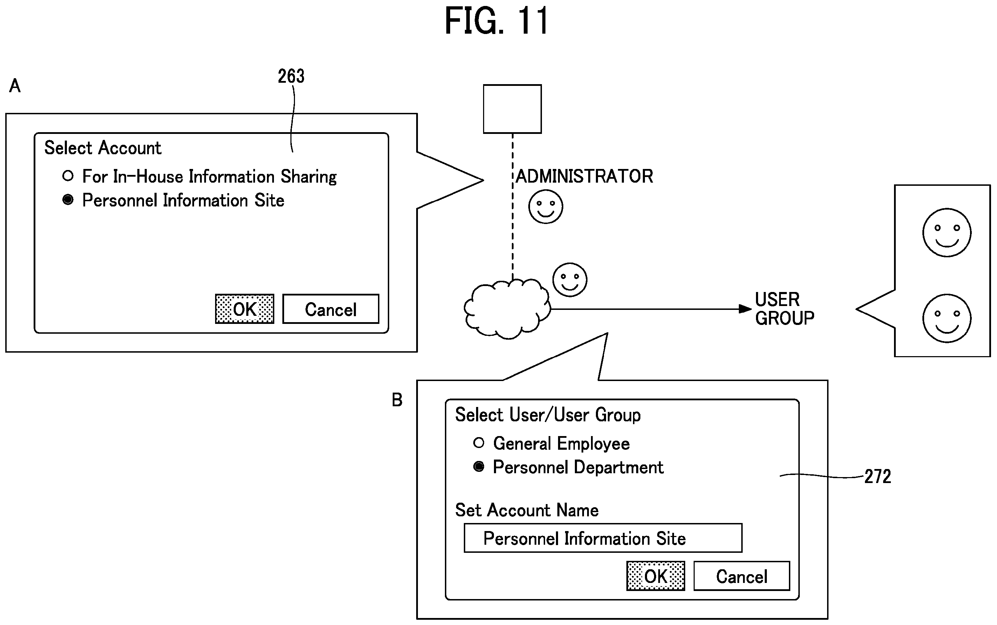

The settings on the application setting screen and the external service coordination screen will further be described with reference to FIG. 11. As indicated by a window A, "Select Account" on the pop-up screen 263 is used to "associate the component 17 with external service coordination information". As indicated by a window B, "Select User/User Group" and "Set Account Name" on the pop-up screen 272 correspond to "to which user/user group to share the external service coordination information".

Further, as indicated by the window A illustrated in FIG. 11, information is set in the item "accountSettings" 215 of the description A. As indicated by the window B illustrated in FIG. 11, information is set in the items "Service" 228, "sharedBy" 231, and "sharedTo" 232 of the description E.

### Application List Screen

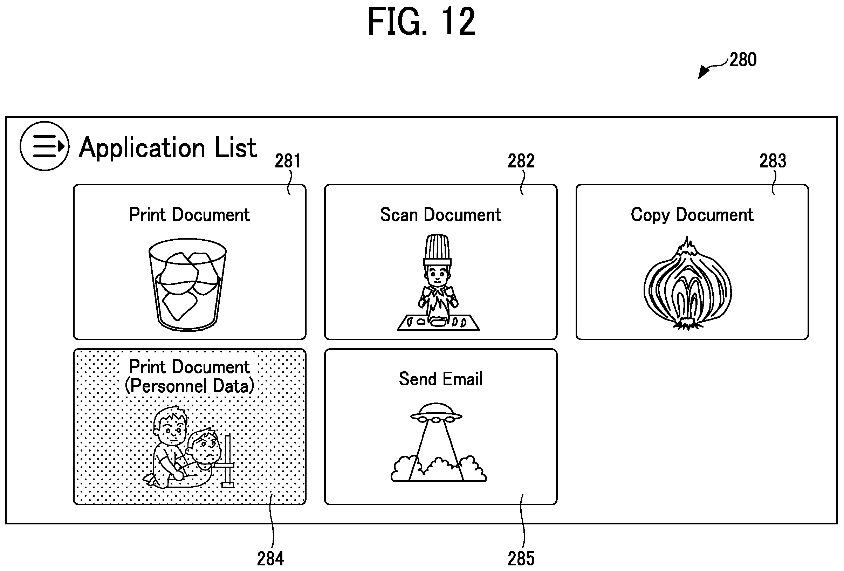

FIG. 12 illustrates an example of an application list screen 280 displayed on the apparatus 20. The application list screen 280 is displayed after user authentication is completed. An application available to a user is automatically determined by:
"(1) sharing external service coordination information to a user or a user group belonging to a tenant; and
(2) limiting a user authorized to use the application to a user belonging to users/user groups to which external service coordination information associated with the application are shared". In FIG. 12, applications 281 to 283 and 285 are available to the user, and an application 284 is not available to the user. While the application 284 is an application for which the tenant has a contract, the automatic determination method according to this embodiment determines that the user is not authorized to use the application 284.

The application 284, which is not available to the user, is disabled. That is, the pressing of the application 284 by the user is not acceptable. In one example, an application unavailable to the user is reduced in luminance, or is grayed down.

### Operation Procedure

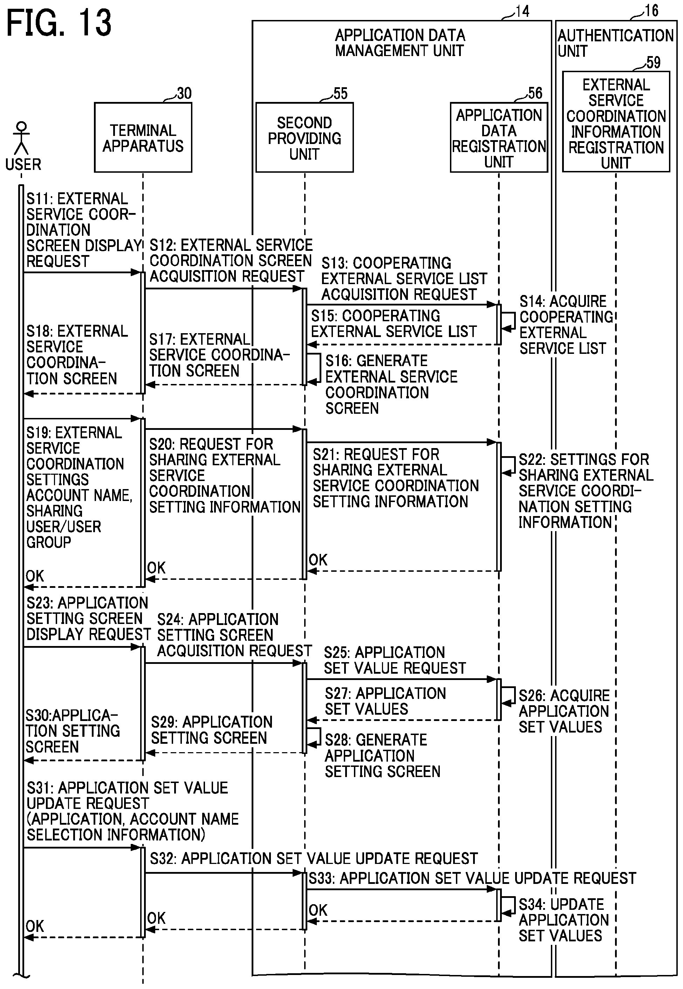

FIG. 13 is a sequence diagram illustrating a process in which an administrator selects an account, selects a user/user group, and sets an account name. While the first communication unit 31 of the terminal apparatus 30 and the third communication unit 11 of the information processing system 10 communicate with each other, the first communication unit 31 and the third communication unit 11 are omitted in FIG. 13.

S11: The administrator inputs an operation of displaying the external service coordination screen 270 to the terminal apparatus 30. The operation reception unit 33 of the terminal apparatus 30 receives the operation.

S12: The first communication unit 31 transmits a request for the external service coordination screen 270 to the information processing system 10. The third communication unit 11 of the information processing system 10 receives the request for the external service coordination screen 270 and passes the request to the second providing unit 55.

S13 to S15: The second providing unit 55 requests the application data registration unit 56 to provide a list of external service systems 40 for cooperation, and acquires the list of external service systems 40 for cooperation. The list of external service systems 40 for cooperation is a list of external service systems 40 that are set in advance as external service systems 40 with which the information processing system 10 can cooperate.

S16: The second providing unit 55 creates an external service coordination screen by using the list of external service systems 40.

S17: The third communication unit 11 of the information processing system 10 transmits screen information of the external service coordination screen 270 to the terminal apparatus 30.

S18: The first communication unit 31 of the terminal apparatus 30 receives the screen information of the external service coordination screen 270, and the display control unit 32 displays the external service coordination screen 270.

S19: The administrator selects an external service system 40 on the external service coordination screen 270, selects a user/user group, and sets an account name, as illustrated in FIG. 10B. The operation reception unit 33 receives the setting. In an example, the external service coordination information includes an account for login to the external service system.

S20: The first communication unit 31 designates set content and transmits a request for sharing external service coordination setting information (i.e., a request for registering the information set on the external service coordination screen 270) to the information processing system 10.

S21: The third communication unit 11 of the information processing system 10 receives the request for sharing external service coordination setting information and passes the received request to the second providing unit 55. The second providing unit 55 requests the application data registration unit 56 to set the request for sharing external service coordination setting information.

S22: The application data registration unit 56 holds the external service system 40, the selected user/user group, and the account name, which are set on the external service coordination screen 270 (corresponding to the items "service" 228, "sharedBy" 231, and "sharedTo" 232 of the description E).

S23: The administrator inputs an operation of displaying the application setting screen 260 to the terminal apparatus 30. The operation reception unit 33 of the terminal apparatus 30 receives the operation.

S24: The first communication unit 31 transmits a request for the application setting screen 260 to the information processing system 10. The third communication unit 11 of the information processing system 10 receives the request for the application setting screen 260 and passes the received request to the second providing unit 55.

S25 to S27: The second providing unit 55 requests the application data registration unit 56 to provide the set values of the application, and acquires the set values of the application. The set values of the application are settings information. Examples of the settings information include processing details such as the component 17 included in the application, and the account name set on the external service coordination screen 270.

S28: The second providing unit 55 creates an application setting screen 260 by using the set values of the application.

S29: The third communication unit 11 of the information processing system 10 transmits screen information of the application setting screen 260 to the terminal apparatus 30.

S30: The first communication unit 31 of the terminal apparatus 30 receives the screen information of the application setting screen 260, and the display control unit 32 displays the application setting screen 260.

S31: The administrator selects an account name for each component (external service system) on the application setting screen 260, as described above with reference to FIG. 10A. The operation reception unit 33 receives the setting.

S32: The first communication unit 31 designates the set component, account name, and identification information of the application and transmits an application set value update request to the information processing system 10.

S33: The third communication unit 11 of the information processing system 10 receives the application set value update request and passes the application set value update request to the second providing unit 55. The second providing unit 55 requests the application data registration unit 56 to update the application set values.

S34: The application data registration unit 56 updates the application set values (corresponding to the item "accountSettings" 215 of the description A).

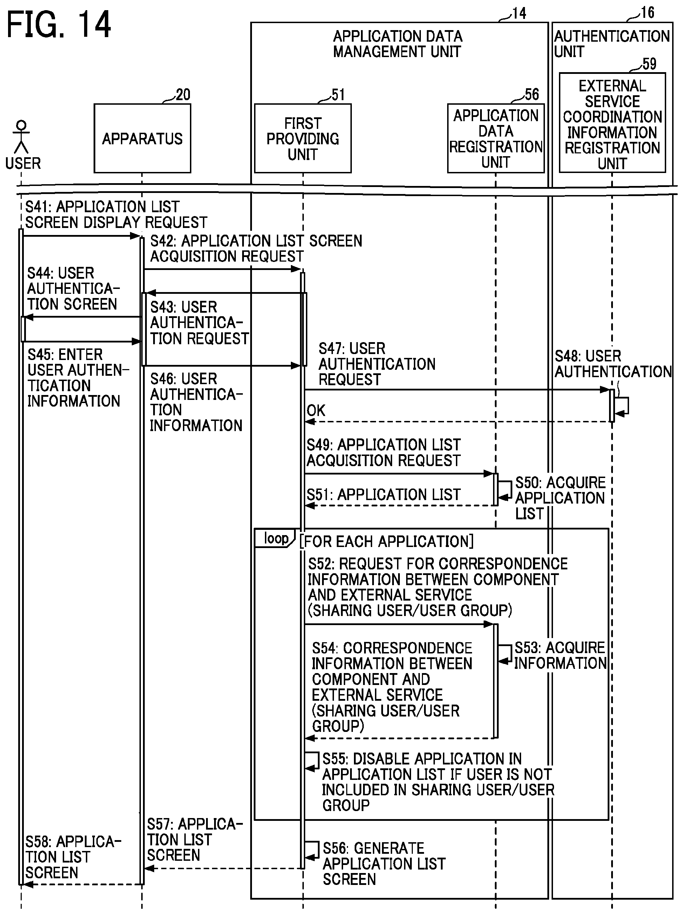

FIG. 14 is a sequence diagram illustrating a process for displaying the application list screen 280 on the apparatus 20. While the second communication unit 21 of the apparatus 20 and the third communication unit 11 of the information processing system 10 communicate with each other, the second communication unit 21 and the third communication unit 11 are omitted in FIG. 14.

S41: The user inputs an operation of displaying the application list screen 280 to the apparatus 20. The operation reception unit 23 of the apparatus 20 receives the operation.

S42: The second communication unit 21 transmits a request for the application list screen 280 to the information processing system 10. The third communication unit 11 of the information processing system 10 receives the request for the application list screen 280 and passes the request to the first providing unit 51.

S43: The first providing unit 51 generates screen information of a user authentication screen for user authentication, and the third communication unit 11 transmits the screen information to the apparatus 20.

S44: The second communication unit 21 of the apparatus 20 receives the screen information of the user authentication screen, and the display control unit 22 displays the user authentication screen.

S45: The user enters user authentication information (a user name and a password) on the user authentication screen. The operation reception unit 23 of the apparatus 20 receives the operation.

S46: The second communication unit 21 transmits the user authentication information to the information processing system 10. The third communication unit 11 of the information processing system 10 receives the user authentication information and passes the user authentication information to the first providing unit 51.

S47 to S48: The first providing unit 51 transmits a user authentication request to the authentication unit 16 and acquires an authentication result (OK).

S49 to S51: Since the authentication is successful, the first providing unit 51 requests the application data registration unit 56 to provide an application list, and acquires the application list. The application list is a list of applications for which the tenant to which the user belongs has a contract.

S52 to S54: The determination unit 65 of the first providing unit 51 acquires, from the application data registration unit 56, a correspondence (the description A) between a component and external service coordination information, and a user/user group to which the external service coordination information is shared (the description E). The determination unit 65 mainly uses the descriptions A and E (in practice, uses the descriptions A to G) to perform a process for limiting a user authorized to use each of applications included in the application list to a user belonging to users/user groups to which external service coordination information associated with the application are shared.

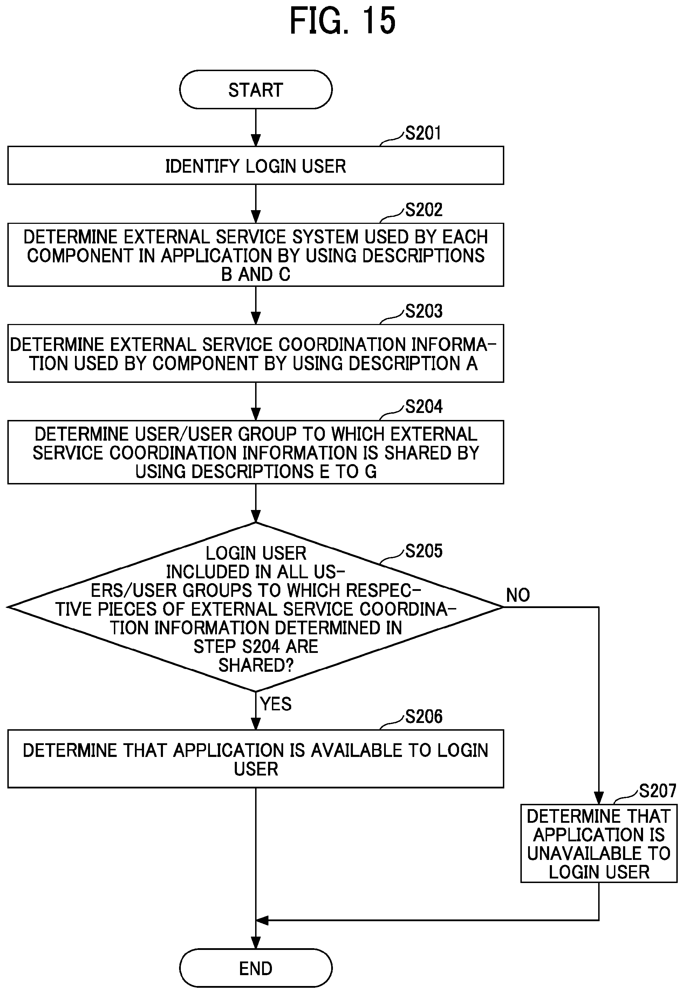

S55: If the login user is not included in the sharing user/user group, the determination unit 65 disables the application in the application list. The determination of step S55 will be described in detail with reference to FIG. 15.

S56: The first providing unit 51 generates an application list screen 280 presenting the application list including a disabled application.

S57: The third communication unit 11 transmits screen information of the application list screen 280 to the apparatus 20.

S58: The second communication unit 21 of the apparatus 20 receives the screen information of the application list screen 280, and the display control unit 22 displays the application list screen 280.

FIG. 15 is a flowchart illustrating a process in which the determination unit 65 limits a user authorized to use each of applications included in an application list to a user belonging to user/user groups to which external service coordination information associated with the application are shared. The process illustrated in FIG. 15 is repeatedly executed for each application.

First, the login user is identified by user authentication (S201).

Then, the determination unit 65 determines the external service system 40 to be used by each component 17 included in the application by using the descriptions B and C illustrated in FIG. 8 (S202). The determination unit 65 removes a component 17 that does not use the external service system 40 from the process.

Then, the determination unit 65 determines external service coordination information to be used by the component 17 by using the description A (S203).

Then, the determination unit 65 determines, for each of pieces of external service coordination information, a user/user group to which the external service coordination information is shared by using the descriptions E to G (S204).

The determination unit 65 determines whether the login user is included in users/user groups to which the respective pieces of external service coordination information determined in step S204 are shared (S205).

If the determination of step S205 is Yes, the determination unit 65 determines that the application is available to the login user (S206).

If the determination of step S205 is No, the determination unit 65 determines that the application is unavailable to the login user (S207).

As described above, this embodiment can reduce the need for the administrator to determine a user authorized to use an application by:
(1) sharing external service coordination information to a user or a user group belonging to a tenant; and
(2) limiting a user authorized to use the application to a user belonging to users/user groups to which external service coordination information associated with the application are shared.

Optionally, the information processing system 10 is configured to verify whether not only a user who has activated an application but also all users in a tenant are each a user belonging to users/user groups to which external service coordination information associated with the application are shared. The information processing system 10 creates a list of users authorized to use the application such that the administrator can check the list. The administrator may fail to notice an error in the setting of the application setting screen 260 or the external service coordination screen 270. This may allow the administrator to easily notice an error in the setting.

Reference can be made to the hardware configuration diagrams illustrated in FIGs. 4 and 5 and the functional block diagram illustrated in FIG. 6 according to the embodiment described above.

### Operation Procedure

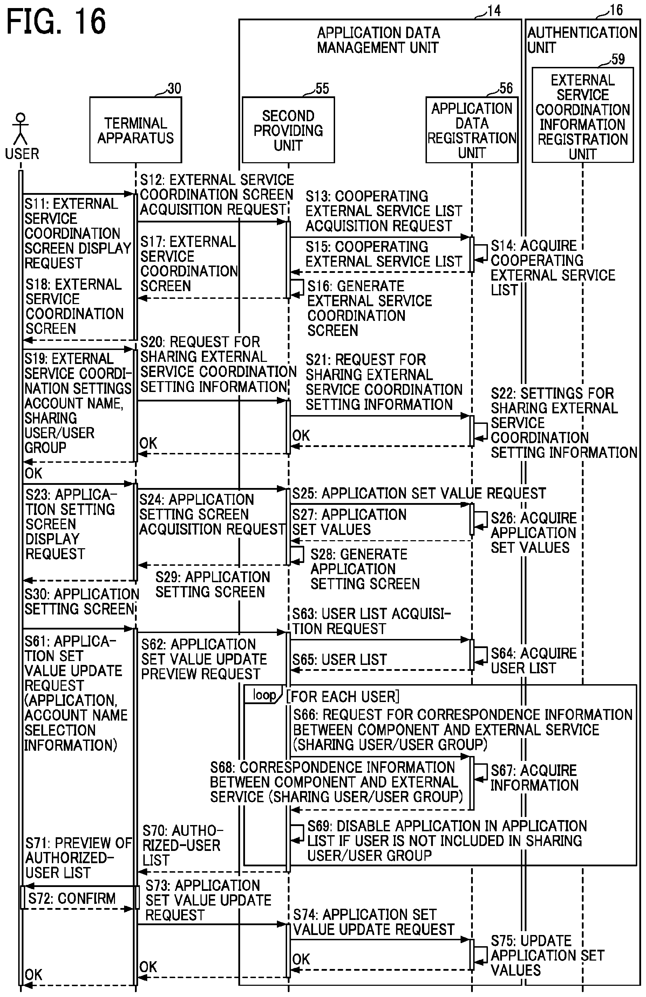

FIG. 16 is a sequence diagram illustrating a process in which the administrator selects an account, selects a user/user group, and sets an account name. In the following description of the example in FIG. 16, differences from the example in FIG. 13 are described. The processing of steps S11 to S30 is similar to that in FIG. 13.

S61: The administrator selects an account name of external service coordination information on the application setting screen 260, as described with reference to FIG. 10A. The operation reception unit 33 receives the setting.

S62: The first communication unit 31 designates the set account name and identification information of an application and transmits an application set value update preview request to the information processing system 10. The application set value update preview request is a request for previewing how a user authorized to use the application is changed.

S63 to S65: The third communication unit 11 of the information processing system 10 receives the application set value update preview request and passes the application set value update preview request to the second providing unit 55. The second providing unit 55 requests the application data registration unit 56 to provide a user list to determine, for each user, whether the application is available to the user. The user list includes all of the users belonging to the tenant.

S66 to S69: The determination unit 66 determines, for each user, whether the application is available to the user. The processing of S66 to S69 is similar to that of S52 to S55 in FIG. 14 or the process illustrated in FIG. 15. Each of the users belonging to the tenant corresponds to a login user.

It is preferable that the determination unit 66 perform the same process before the update of the application settings to allow the second providing unit 55 to display a user who becomes authorized to use the application and a user who is no longer authorized to use the application. That is, the determination unit 66 performs the same process twice for the association between the component and the external service coordination information before the update of the application settings and for the association between the component and the external service coordination information after the update of the application settings.

S70: The second providing unit 55 generates an authorized-user list screen, and the third communication unit 11 transmits the authorized-user list screen to the terminal apparatus 30.

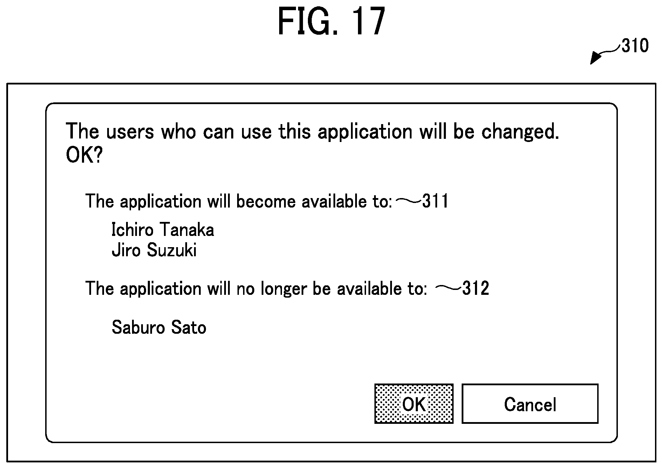

S71: The first communication unit 31 of the terminal apparatus 30 receives the authorized-user list screen, and the display control unit 32 displays the authorized-user list screen. An example of the authorized-user list screen is illustrated in FIG. 17.

S72: The administrator inputs confirmation to the terminal apparatus 30, and the operation reception unit 33 receives the confirmation.

The processing of steps S73 to S75 is similar to that of steps S32 to S34 in FIG. 13.

FIG. 17 illustrates an example of an authorized-user list screen 310 displayed on the terminal apparatus 30. The authorized-user list screen 310 displays the names of users 311 who become authorized to use the application, and the name of a user 312 who is no longer authorized to use the application. In the display of such user names, in one example, the determination unit 66 holds information on a user authorized to use the application and a user not authorized to use the application before the update of the application settings, determines a user authorized to use the application and a user not authorized to use the application after the update of the application settings, and compares the corresponding users before and after the update of the application settings.

This allows the administrator to easily notice an error in the settings when selecting an account name to be used by a component, selecting a user/user group, or setting an account name.

In some cases, the administrator performs editing related to a user group. Examples of such editing include deletion of a user group, integration of user groups, addition of a user to be included in a user group, and deletion of a user included in a user group. In a method for determining a user authorized to use an application, it is difficult to predict how much a change made to a user group will affect the right to use the application. How a user authorized to use the application is changed between before and after editing for a user group is determined and notified to the administrator who is to perform editing related to the user group. The notification allows the administrator who performs editing related to the user group to easily notice a problem in editing related to the user group in advance.

Reference can be made to the hardware configuration diagrams illustrated in FIGs. 4 and 5 and the functional block diagram illustrated in FIG. 6 according to the embodiment described above.

### Operation Procedure

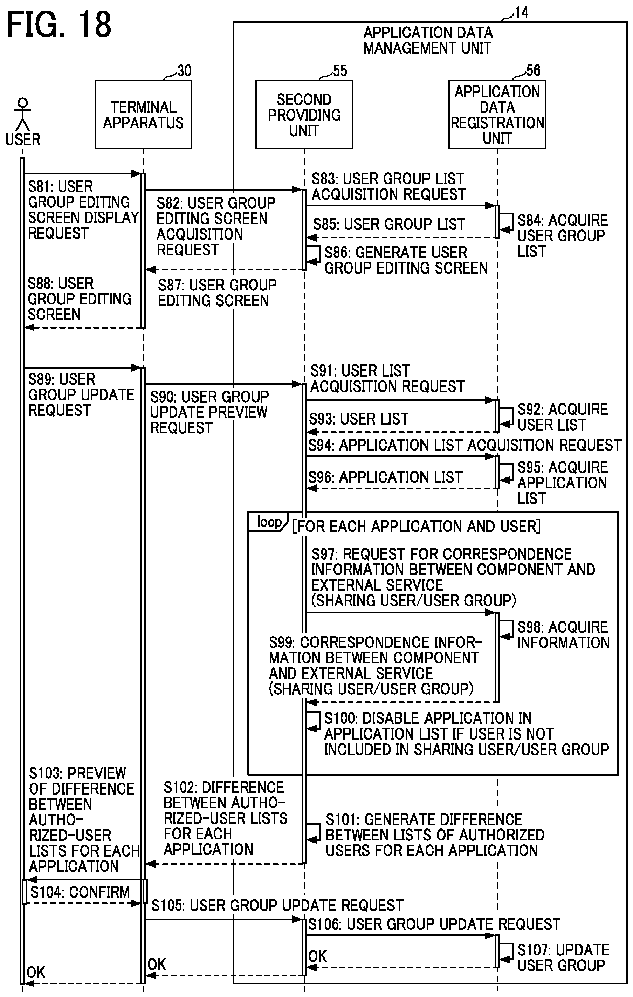

FIG. 18 is a sequence diagram illustrating a process in which the administrator changes a user group.

S81: The administrator inputs an operation of displaying a user group editing screen to the terminal apparatus 30. The operation reception unit 33 of the terminal apparatus 30 receives the operation.

S82: The first communication unit 31 transmits a request for the user group editing screen to the information processing system 10. The third communication unit 11 of the information processing system 10 receives the request for the user group editing screen and passes the request to the second providing unit 55.

S83 to S85: The second providing unit 55 requests the application data registration unit 56 to provide a current user group list, and acquires the user group list. The user group list is a list of user groups registered in the tenant.

S86: The second providing unit 55 creates a user group editing screen by using the user group list.

S87: The third communication unit 11 of the information processing system 10 transmits screen information of the user group editing screen to the terminal apparatus 30.

S88: The first communication unit 31 of the terminal apparatus 30 receives the screen information of the user group editing screen, and the display control unit 32 displays the user group editing screen.

S89: The administrator performs, on the user group editing screen, deletion of a user group, integration of user groups, addition of a user to be included in a user group, deletion of a user included in a user group, or any other editing operation. The operation reception unit 33 receives the editing operation.

S90: The first communication unit 31 transmits a user group update preview request to the information processing system 10. The user group update preview request is a request for previewing how a user authorized to use the application is changed in response to an update of the user group. The third communication unit 11 of the information processing system 10 receives the user group update preview request and passes the user group update preview request to the second providing unit 55.

S91 to S93: The second providing unit 55 requests the application data registration unit 56 to provide a user list that is a list of users belonging to the tenant, and acquires the user list.

S94 to S96: The second providing unit 55 further requests the application data registration unit 56 to provide an application list, and acquires the application list. The application list is a list of applications for which the tenant has a contract.

S97 to S100: The determination unit 66 determines, for each application, whether the application is available to each of the users. The processing of S97 to S100 is similar to that of S52 to S55 in FIG. 14 or the process illustrated in FIG. 15.

S101: The second providing unit 55 creates a difference between authorized-user lists for each application. The determination unit 66 holds, for each application, information on a user authorized to use the application and a user not authorized to use the application before the editing of the user group, determines a user authorized to use the application and a user not authorized to use the application after the editing of the user group, and compares the corresponding users before and after the editing of the user group. The second providing unit 55 identifies, for each application, a user who becomes authorized to use the application and a user who is no longer authorized to use the application.

The second providing unit 55 uses the difference between the authorized-user lists for each application to create an authorized-user list difference screen.

S102: The third communication unit 11 of the information processing system 10 transmits screen information of the authorized-user list difference screen to the terminal apparatus 30.

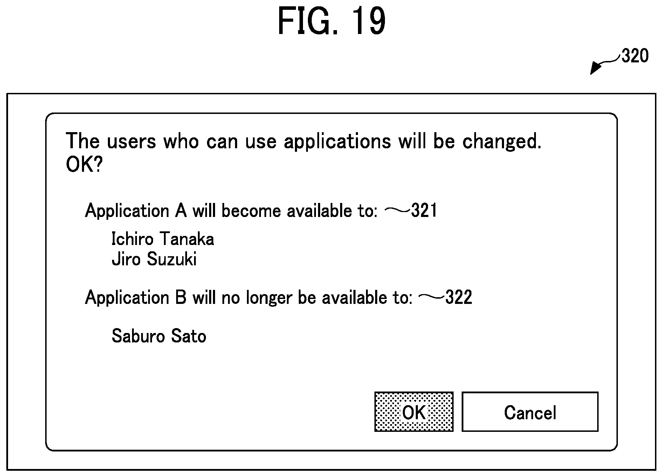

S103: The first communication unit 31 of the terminal apparatus 30 receives the screen information of the authorized-user list difference screen, and the display control unit 32 displays the authorized-user list difference screen. An example of the authorized-user list difference screen is illustrated in FIG. 19.

S104: The administrator checks, for each application, a user who becomes authorized to use the application and a user who is no longer authorized to use the application, and updates the user group.

S105: The first communication unit 31 transmits a user group update request to the information processing system 10. The third communication unit 11 of the information processing system 10 receives the user group update request and passes the user group update request to the second providing unit 55.

S106 and S107: The second providing unit 55 requests the application data registration unit 56 to update the user group, and the application data registration unit 56 updates the user group.

FIG. 19 illustrates an example of an authorized-user list difference screen 320, which is displayed on the terminal apparatus 30. The authorized-user list difference screen 320 displays, for each application, the names of users 321 who become authorized to use the application, and the name of a user 322 who is no longer authorized to use the application.

This allows the administrator who performs a change related to a user group to easily notice a problem in the change related to the user group in advance.

The above-described embodiment is illustrative and does not limit the present disclosure. Thus, numerous additional modifications and variations are possible in light of the above teachings. For example, elements and/or features may be combined with each other and/or substituted for each other within the scope of the present disclosure. Any one of the above-described operations may be performed in various other ways, for example, in an order different from the one described above.

In the example configurations illustrated in FIG. 6 and the like, the terminal apparatus 30, the apparatus 20, and the information processing system 10 are each divided according to main functions to facilitate understanding of the processes performed by the terminal apparatus 30, the apparatus 20, and the information processing system 10. No limitation is intended by how the functions are divided by process or by the name of the functions. The processing of the terminal apparatus 30, the apparatus 20, and the information processing system 10 may be divided into more units of processing in accordance with the content of the processing. Further, the division may be made such that each unit of processing includes more processing operations.

The apparatuses described i are just one example of plural computing environments that implement the one embodiment disclosed herein. The information processing system 10 may include multiple computing devices, such as a server cluster. The plural computing devices are configured to communicate with one another through any type of communication link including a network, a shared memory, etc., and perform the processes disclosed herein.

Further, the information processing system 10 can be configured to share the processing steps described above, for example, the processing steps illustrated in FIGs. 13, 14, 16, and 18, in various combinations. For example, a process executed by a predetermined unit may be executed by a plurality of information processing apparatuses included in the information processing system 10. The components of the information processing system 10 may be integrated into one server apparatus or divided into a plurality of apparatuses.

Each of the functions may be implemented by one or more processing circuits or circuitry. The term "processing circuit" or "processing circuitry", as used herein, includes a processor programmed to implement each function by software, such as a processor implemented by an electronic circuit, and devices designed to implement the functions described above, such as an ASIC, a digital signal processor (DSP), a field programmable gate array (FPGA), and existing circuit modules.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system (10) for executing an application in cooperation with an external service system (40), the information processing system (10) comprising:
a registration unit (56) configured to manage first information and second information,
the first information being information in which each of one or more processes included in the application is associated with coordination information for cooperation with the external service system (40),
the second information being information in which the coordination information is associated with a user group who share the coordination information;
a determination unit (65, 66) configured to determine, by using the first information and the second information, a user included in user groups who share coordination information associated with the one or more processes included in the application; and
a providing unit (11) configured to provide information on the determined user;
wherein the determination unit (65, 66) is configured to limit access to the application to users determined to be included in user groups who share coordination information associated with the one or more processes included in the application.

2. The information processing system (10) according to claim 1, further comprising:
an authentication unit (16) configured to authenticate a login user who operates an apparatus, wherein
in response to a request from the apparatus for a list of applications available to the login user,
the determination unit (65, 66) is configured to determine, for each of applications for which a tenant to which the login user belongs has a contract, whether the login user is included in user groups who share coordination information associated with the one or more processes included in the application, by using the first information and the second information, and
the providing unit (11) is configured to provide the list of applications to the apparatus, the list of applications including an application for which the login user is included in the user groups who share coordination information associated with the one or more processes.

3. The information processing system (10) according to claim 1 or 2, wherein
the determination unit (65, 66) is configured to, in response to a request transmitted from a terminal apparatus to update the first information, the first information being related to a particular application:
acquire a user list including one or more users belonging to a tenant; and
determine whether each of the one or more users included in the user list is included in the user groups who share coordination information associated with the one or more processes included in the particular application, and
the providing unit (11) is configured to provide, to the terminal apparatus, information on a user who is authorized to use the particular application in response to an update of the first information and information on a user who is no longer authorized to use the particular application in response to the update of the first information.

4. The information processing system (10) according to any one of claims 1 to 3, wherein
the determination unit (65, 66) is configured to, in response to a request transmitted from a terminal apparatus to update a particular user group,
acquire a user list including one or more users belonging to a tenant to which the particular user group is assigned;
acquire an application list including one or more applications for which the acquired tenant has a contract; and
determine, for each of the one or more applications, whether each of the one or more users included in the user list is included in the user groups who share coordination information associated with the one or more processes included in the application, and
the providing unit (11) is configured to provide, for each of the one or more applications, information on a user who is authorized to use the application in response to an update of the particular user group and information on a user who is no longer authorized to use the application in response to the update of the particular user group.

5. The information processing system (10) according to any one of claims 1 to 4, wherein the providing unit (11) is configured to:
provide an external service coordination screen for receiving a correspondence between each of the one or more processes included in the application and coordination information for cooperation with the external service system (40); and
receive setting of the first information on the external service coordination screen.

6. The information processing system (10) according to any one of claims 1 to 5, wherein the providing unit (11) is configured to:
provide an application setting screen for receiving a correspondence between the coordination information and the user or the user group who shares the coordination information; and
receive setting of the second information on the application setting screen.

7. An information processing method performed by an information processing system for executing an application in cooperation with an external service system, the information processing method comprising:
determining (S52, S53, S54, S55) a user by using first information and second information,
the first information being information in which each of one or more processes included in the application is associated with coordination information for cooperation with the external service system,
the second information being information in which the coordination information is associated with a user group who shares the coordination information,
the user being included in user groups who share coordination information associated with the one or more processes included in the application;
providing (S57) information on the determined user; and
limiting access to the application to users determined to be included in user groups who share coordination information associated with the one or more processes included in the application.

8. Carrier means carrying computer readable code for controlling a computer system to carry out the method of claim 7.

## Patentansprüche

1. Informationsverarbeitungssystem (10) zum Ausführen einer Anwendung in Zusammenarbeit mit einem externen Dienstsystem (40), wobei das Informationsverarbeitungssystem (10) umfasst:
eine Registrierungseinheit (56), die konfiguriert ist, um erste Informationen und zweite Informationen zu verwalten,
wobei die ersten Informationen Informationen sind, in denen jedem von einem oder mehreren in der Anwendung enthaltenen Prozessen Koordinierungsinformationen für die Zusammenarbeit mit dem externen Dienstsystem (40) zugeordnet sind,
wobei die zweiten Informationen Informationen sind, in denen die Koordinierungsinformationen einer Benutzergruppe zugeordnet sind, die die Koordinierungsinformationen teilt;
eine Bestimmungseinheit (65, 66), die konfiguriert ist, um unter Verwendung der ersten Informationen und der zweiten Informationen einen Benutzer zu bestimmen, der in Benutzergruppen enthalten ist, die Koordinierungsinformationen teilen, die dem einen oder den mehreren in der Anwendung enthaltenen Prozessen zugeordnet sind; und
eine Bereitstellungseinheit (11), die konfiguriert ist, um Informationen über den bestimmten Benutzer bereitzustellen;
wobei die Bestimmungseinheit (65, 66) konfiguriert ist, um den Zugriff auf die Anwendung auf Benutzer zu beschränken, die als zu Benutzergruppen gehörig bestimmt wurden, die Koordinierungsinformationen teilen, die dem einen oder den mehreren Prozessen zugeordnet sind, die in der Anwendung enthalten sind.

2. Informationsverarbeitungssystem (10) nach Anspruch 1, ferner umfassend:
eine Authentifizierungseinheit (16), die konfiguriert ist, um einen angemeldeten Benutzer zu authentifizieren, der ein Gerät bedient, wobei
als Reaktion auf eine Anfrage des Geräts nach einer Liste der Anwendungen, die dem angemeldeten Benutzer zur Verfügung stehen,
die Bestimmungseinheit (65, 66) konfiguriert ist, um für jede der Anwendungen, für die ein Mandant, zu dem der angemeldete Benutzer gehört, einen Vertrag aufweist, zu bestimmen, ob der angemeldete Benutzer in Benutzergruppen enthalten ist, die Koordinierungsinformationen teilen, die dem einen oder den mehreren in der Anwendung enthaltenen Prozessen zugeordnet sind, unter Verwendung der ersten Informationen und der zweiten Informationen, und
die Bereitstellungseinheit (11) konfiguriert ist, um die Liste von Anwendungen an das Gerät bereitzustellen, wobei die Liste von Anwendungen eine Anwendung enthält, für die der angemeldete Benutzer in den Benutzergruppen enthalten ist, die Koordinierungsinformationen teilen, die dem einen oder den mehreren Prozessen zugeordnet sind.

3. Informationsverarbeitungssystem (10) nach Anspruch 1 oder 2, wobei die Bestimmungseinheit (65, 66) konfiguriert ist, um, als Reaktion auf eine von einem Endgerät übertragene Anforderung zur Aktualisierung der ersten Informationen, wobei die ersten Informationen sich auf eine bestimmte Anwendung beziehen, Folgendes auszuführen:
Erfassen einer Benutzerliste mit einem oder mehreren Benutzern, die zu einem Mandanten gehören, und
Bestimmen, ob jeder von dem einen oder den mehreren Benutzern, die in der Benutzerliste enthalten sind, in den Benutzergruppen enthalten ist, die Koordinierungsinformationen teilen, die dem einen oder mehreren Prozessen in der bestimmten Anwendung zugeordnet sind, und
die Bereitstellungseinheit (11) konfiguriert ist, um an das Endgerät Informationen über einen Benutzer bereitzustellen, der zur Verwendung der bestimmten Anwendung berechtigt ist, als Reaktion auf eine Aktualisierung der ersten Informationen, und Informationen über einen Benutzer bereitzustellen, der nicht mehr zur Verwendung der bestimmten Anwendung berechtigt ist, als Reaktion auf die Aktualisierung der ersten Informationen.

4. Informationsverarbeitungssystem (10) nach einem der Ansprüche 1 bis 3, wobei
die Bestimmungseinheit (65, 66), als Reaktion auf eine von einem Endgerät übermittelte Anforderung zur Aktualisierung einer bestimmten Benutzergruppe, konfiguriert ist zum,
Erfassen einer Benutzerliste mit einem oder mehreren Benutzern, die zu einem Mandanten gehören, dem die bestimmte Benutzergruppe zugeordnet ist;
Erfassen einer Anwendungsliste, die eine oder mehrere Anwendungen enthält, für die der erfasste Mandant einen Vertrag aufweist; und
Bestimmen, für jede der einen oder mehreren Anwendungen, ob jeder von dem einen oder den mehreren Benutzern, die in der Benutzerliste enthalten sind, in den Benutzergruppen enthalten ist, die Koordinierungsinformationen teilen, die dem einen oder den mehreren Prozessen zugeordnet sind, die in der Anwendung enthalten sind, und
die Bereitstellungseinheit (11) so konfiguriert ist, dass sie für jede der einen oder mehreren Anwendungen, Informationen über einen Benutzer, der zur Verwendung der Anwendung berechtigt ist, als Reaktion auf eine Aktualisierung der bestimmten Benutzergruppe und Informationen über einen Benutzer bereitstellt, der nicht mehr zur Verwendung der Anwendung berechtigt ist, als Reaktion auf die Aktualisierung der bestimmten Benutzergruppe.

5. Informationsverarbeitungssystem (10) nach einem der Ansprüche 1 bis 4, wobei die Bereitstellungseinheit (11) konfiguriert ist zum:
Bereitstellen eines externen Dienstkoordinationsbildschirms zum Empfangen einer Korrespondenz zwischen jedem der einen oder mehreren in der Anwendung enthaltenen Prozesse und Koordinierungsinformationen für die Zusammenarbeit mit dem externen Dienstsystem (40); und
Empfangen der Einstellung der ersten Informationen auf dem externen Dienstkoordinationsbildschirm.

6. Informationsverarbeitungssystem (10) nach einem der Ansprüche 1 bis 5, wobei die Bereitstellungseinheit (11) konfiguriert ist zum:
Bereitstellen eines Anwendungseinstellungsbildschirms zum Empfangen einer Korrespondenz zwischen den Koordinierungsinformationen und dem Benutzer oder der Benutzergruppe, die die Koordinierungsinformationen teilt; und
Empfangen der Einstellung der zweiten Informationen auf dem Anwendungseinstellungsbildschirm.

7. Informationsverarbeitungsverfahren, das von einem Informationsverarbeitungssystem zum Ausführen einer Anwendung in Zusammenarbeit mit einem externen Dienstsystem durchgeführt wird, wobei das Informationsverarbeitungsverfahren umfasst:
Bestimmen (S52, S53, S54, S55) eines Benutzers unter Verwendung erster Informationen und zweiter Informationen,
wobei die ersten Informationen Informationen sind, in denen jeder von einem oder mehreren in der Anwendung enthaltenen Prozessen Koordinierungsinformationen für die Zusammenarbeit mit dem externen Dienstsystem zugeordnet sind,
wobei die zweiten Informationen Informationen sind, in denen die Koordinierungsinformationen einer Benutzergruppe zugeordnet sind, die die Koordinierungsinformationen teilt,
wobei der Benutzer in Benutzergruppen enthalten ist, die Koordinierungsinformationen teilen, die. den einen oder mehreren in der Anwendung enthaltenen Prozessen zugeordnet sind;
Bereitstellen (S57) von Informationen über den ermittelten Benutzer; und
Beschränken des Anwendungszugriffs auf Benutzer, die als zu Benutzergruppen gehörig ermittelt wurden, die Koordinierungsinformationen teilen, die dem einen oder den mehreren Prozessen zugeordnet sind, die in der Anwendung enthalten sind.

8. Trägermittel, das einen computerlesbaren Code zum Steuern eines Computersystems speichert, um das Verfahren nach Anspruch 7 auszuführen.

## Revendications

1. Système de traitement d'informations (10) pour l'exécution d'une application en coopération avec un système de service externe (40), le système de traitement d'informations (10) comprenant:
une unité d'enregistrement (56) configurée pour gérer des premières informations et des deuxièmes informations,
les premières informations étant des informations dans lesquelles chacun d'un ou plusieurs processus inclus dans l'application est associé à des informations de coordination pour la coopération avec le système de service externe (40),
les deuxièmes informations étant des informations dans lesquelles les informations de coordination sont associées à un groupe d'utilisateurs qui partagent les informations de coordination;
une unité de détermination (65, 66) configurée pour déterminer, en utilisant les premières informations et les deuxièmes informations, un utilisateur inclus dans des groupes d'utilisateurs qui partagent des informations de coordination associées aux un ou plusieurs processus inclus dans l'application; et
une unité de fourniture (11) configurée pour fournir des informations sur l'utilisateur déterminé;
dans lequel l'unité de détermination (65, 66) est configurée pour limiter l'accès à l'application aux utilisateurs déterminés comme devant être inclus dans des groupes d'utilisateurs qui partagent des informations de coordination associées à un ou plusieurs processus inclus dans l'application.

2. Système de traitement d'informations (10) selon la revendication 1, comprenant en outre:
une unité d'authentification (16) configurée pour authentifier un utilisateur de connexion qui exploite un appareil, dans lequel
en réponse à une demande de l'appareil d'une liste d'applications disponibles pour l'utilisateur de connexion,
l'unité de détermination (65, 66) est configurée pour déterminer, pour chacune des applications pour lesquelles un locataire auquel l'utilisateur de connexion appartient a un contrat, si l'utilisateur de connexion est inclus dans des groupes d'utilisateurs qui partagent des informations de coordination associées aux un ou plusieurs processus inclus dans l'application, en utilisant les premières informations et les deuxièmes informations, et
l'unité de fourniture (11) est configurée pour fournir la liste des applications à l'appareil, la liste des applications incluant une application pour laquelle l'utilisateur de connexion est inclus dans les groupes d'utilisateurs qui partagent des informations de coordination associées aux un ou plusieurs processus.

3. Système de traitement d'informations (10) selon les revendications 1 ou 2, dans lequel l'unité de détermination (65, 66) est configurée pour, en réponse à une demande transmise par un appareil terminal pour mettre à jour les premières informations, les premières informations étant relatives à une application particulière:
acquérir une liste d'utilisateurs incluant un ou plusieurs utilisateurs appartenant à un locataire; et
déterminer si chacun des un ou plusieurs utilisateurs inclus dans la liste d'utilisateurs est inclus dans les groupes d'utilisateurs qui partagent des informations de coordination associées aux un ou plusieurs processus inclus dans l'application particulière, et
l'unité de fourniture (11) est configurée pour fournir, à l'appareil terminal, des informations sur un utilisateur qui est autorisé à utiliser l' application particulière en réponse à une mise à jour des premières informations et des informations sur un utilisateur qui n'est plus autorisé à utiliser l'application particulière en réponse à la mise à jour des premières informations.

4. Système de traitement d'informations (10) selon l'une quelconque des revendications 1 à 3, dans lequel
l'unité de détermination (65, 66) est configurée pour, en réponse à une demande transmise par un appareil terminal, mettre à jour un groupe d'utilisateurs particulier,
acquérir une liste d'utilisateurs incluant un ou plusieurs utilisateurs appartenant à un locataire auquel le groupe d'utilisateurs particulier est affecté;
acquérir une liste d'applications incluant une ou plusieurs applications pour lesquelles le locataire acquis a un contrat; et
déterminer, pour chacune des une ou plusieurs applications, si chacun des un ou plusieurs utilisateurs inclus dans la liste d'utilisateurs est inclus dans les groupes d'utilisateurs qui partagent les informations de coordination associées aux un ou plusieurs processus inclus dans l'application, et
l'unité de fourniture (11) est configurée pour fournir, pour chacune des une ou plusieurs applications, des informations sur un utilisateur qui est autorisé à utiliser l'application en réponse à une mise à jour du groupe d'utilisateurs particulier et des informations sur un utilisateur qui n'est plus autorisé à utiliser l'application en réponse à la mise à jour du groupe d'utilisateurs particulier.

5. Système de traitement d'informations (10) selon l'une quelconque des revendications 1 à 4, dans lequel l'unité de fourniture (11) est configurée pour:
fournir un écran de coordination de service externe pour recevoir une correspondance entre chacun des un ou plusieurs processus inclus dans l'application et des informations de coordination pour la coopération avec le système de service externe (40);
et
recevoir le réglage des premières informations sur l'écran de coordination de service externe.

6. Système de traitement d'informations (10) selon l'une quelconque des revendications 1 à 5, dans lequel l'unité de fourniture (11) est configurée pour:
prévoir un écran de réglage de l'application pour recevoir une correspondance entre les informations de coordination et l'utilisateur ou le groupe d'utilisateurs qui partage les informations de coordination; et
recevoir le réglage des deuxièmes informations sur l'écran de réglage de l'application.

7. Procédé de traitement d'informations exécuté par un système de traitement d'informations pour exécuter une application en coopération avec un système de service externe, le procédé de traitement d'informations comprenant:
la détermination (S52, S53, S54, S55) d'un utilisateur en utilisant des premières informations et des deuxièmes informations,
les premières informations étant des informations dans lesquelles chacun d'un ou plusieurs processus inclus dans l'application est associé à des informations de coordination pour la coopération avec le système de service externe,
les deuxièmes informations étant des informations dans lesquelles les informations de coordination sont associées à un groupe d'utilisateurs qui partagent les informations de coordination,
l'utilisateur étant inclus dans les groupes d'utilisateurs qui partagent les informations de coordination associées aux un ou plusieurs processus inclus dans l'application;
la fourniture (S57) d'informations sur l'utilisateur déterminé; et
la limitation de l'accès à l'application aux utilisateurs déterminés à être inclus dans des groupes d'utilisateurs qui partagent des informations de coordination associées aux un ou plusieurs processus inclus dans l'application.

8. Moyen de stockage portant un code lisible par ordinateur pour commander un système informatique pour mettre en œuvre le procédé selon la revendication 7.
